# EUROPEAN PATENT APPLICATION

(11) **EP 2 178 269 A1**
(43) Date of publication of application: **21.04.2010**
(21) Application number: 09173563.9
(22) Date of filing: 20.10.2009
(51) Int. Cl.: H04L 29/08, G06Q 30/00

(54) **Monitoring the content of communications to a user gateway**

(30) Priority: 20.10.2008 EP 08290985
(71) Applicant: Alcatel Lucent, 75008 Paris (FR)
(72) Inventor: Kisel, Andrey, Maidenhead, Berkshire SL6 8DH (GB); Robinson, David Cecil, Aldbourne, Wiltshire SN8 2NP (GB)
(74) Representative: Fitchett, Stuart Paul

(57) **Abstract**

A communication network (1) is provided for transmitting communications from a plurality of service delivery environments (2 to 6) to a plurality of user gateways (7 to 9) and via them to the plurality of end user devices (such as IPTV Set Top Box, PC, Digital telephone). The network comprising a monitoring system (21) arranged to monitor the content of communications to be delivered to each of the end user via the plurality of user gateways. The monitoring system (21) is typically located at an access node (20) of the communication network and may be used to create or update a user profile of an individual user, which profile can subsequently be used for commercial purposes and may be used to modify the content received by the respective user from the service delivery environments (2 to 6). The monitoring system identifies a TV channel requested and the genre of the program transmitted to the user and uses this information to create or update the user profile.

## Description

### Background of the Invention

The present invention relates to a method and apparatus for monitoring the content of communications received by a user from a plurality of service delivery environments (eg the Internet, Internet protocol TV, IP multimedia subsystem). This enables information relating to the content to then be used to establish a user's profile. Such information may be used to modify content subsequently received by the user.

Commercial Internet protocol TV (IPTV) deployments are being evolved that will become a part of a wider service delivery environment (SDE), providing users with reach blended services. Reach blended services are a combination of traditional TV services, communicational services, Internet, for example displaying e-mail or incoming call numbers on a TV screen, sending SMS message from a TV screen and using user Internet searches to personalise TV advertising. Typical blending combines services often provided by different service delivery environments, such as those that provide Internet content delivery, Internet protocol TV, voice over internet protocol - internet protocol multimedia subsystem (VoIP - IMS), electronic mail, Internet surfing, really simple syndication (RSS) feeds, various messaging solutions and specialised corporate applications, for example integration with a user's calendar or a corporate calendar.

While provision of a large number of services to a user is normally desirable, reach offer selections (selections where a user can have thousands of video on demand movies to choose from), often complicate and overload users with choices, sometimes to such an extent as to create a negative experience. For example, content selection can easily exceed five thousand video on demand (VoD) titles, hundreds of broadcast channels and a large amount of content from over-the-top providers (OTTP). Accurate historic information could be used to generate a profile of a user's activities attained from the detected content information, in order to narrow offers, improve content recommendations, provide better service recommendations and personalise advertising.

Extending services beyond a single service delivery environment and reach service selection raises multiple challenges to the ability to obtain a user's profile and so to achieve efficient personalisation and adaptation of services to a user's lifestyle. Such personalisation may, for example, include packaging and delivering communication information at the appropriate time via the most suitable means, regardless of the originating source. Alternatively, or in addition thereto, it may enable a system to be implemented that reflects a current user's status and presence accurately, across multiple service delivery environments and which could obtain high granularity, historic activities across multiple service delivery environments to create the user's profile. This could then be used to tailor subsequent services delivered to a user.

As a very simple example, if a user searched the Internet for new car promotions and this information could be collected in a user's profile, the information would be valuable as it could be used to personalise primetime television movies with car commercials, when that same user subsequently watches a TV channel. Another simple example is if a user sends many SMS messages, the information may be used to personalize Internet advertising with personalised promotions of new SMS packages when the user subsequently accesses the Internet.

A system to compile a user profile or a user presence has previously been proposed for use in a wireless network. Here a user's ability and willingness to be reached for communication is defined by a set of information, which shall hereinafter be referred as the user's presence. This presence information may contain present status, for example the user is 'busy', 'idle', or 'at a meeting' so that other users can decide to postpone a call and may be send SMS message instead. This presence information is usually supplied and maintained by the user.

There are two main problems with the previously proposed system. First it is limited to detecting a state of a device rather than an individual service (http browsing, CoD streaming) performed by the device, for example the presence reflects the status of a mobile device user, as illustrated above. This presence does not contain information about other user activities, eg the Internet browsing via fixed line or TV watching. The second problem is that the user needs to supply and update his presence status, so the element of human error is high and the accuracy of the presence information relies on the user updates. The system is limited to wireless or communication network components, services and applications. Consequently, it cannot be easily adopted for cross SDE blending (ie with Internet, IPTV) often delivered across different access technologies, for example wire-line and wireless.

Cross SDE blending may comprise displaying e-mail or incoming call number on TV screen, sending SMS message from a TV screen, using user Internet searches to personalise TV advertising.

Furthermore, it cannot be easily adopted for existing services such as IPTV, Internet, messaging, RSS or corporate services because these existing services are not designed to supply presence information. Furthermore, the known approach has a low granularity of presence information, eg user is unlikely to update his profile with all programs he previously watched on TV.

Generally application, or end user, based presence collection, as described in the previously proposed system, creates inefficient application development practices for cross SDE blending, because each application must be designed with the option to supply presence information. The system also could not provide sufficient information for high granularity, historic activities across multiple SDEs for user profiling.

US Patent Application US 2008/0065759 Al discloses a system whereby all communication traffic exchanged with a communication network subscriber over an access communication link is monitored to generate a behavioural profile for a user, however the data collected is obtained from monitoring the address content is received from. This enables a profile to be built up based on websites visited or IPTV channel services watched.

### Summary of the Invention

According to the present invention there is provided a communications system comprising a communications network, the communications network being arranged to transmit communications from a plurality of service delivery environments to a plurality of end users via a plurality of user gateways. The network comprises a monitoring system arranged to monitor the services requested by each of the plurality of users via the plurality of user gateways from the plurality of service delivery environments, the system comprising one or more servers for creating or updating user profiles for the plurality of users or user gateways, wherein at least one of the service delivery environments provides broadcast Internet TV and/or Internet Protocol TV (IPTV), the monitoring system identifies a TV channel requested by the user and the genre of the specific program transmitted to the user on that channel and uses this information to create or update the user profile.

A communication system in accordance with the present invention uses the genre of a specific program transmitted to the user to update or create the user's profile. This information is important because the IP address selected may not provide very valuable data for creating a user's profile when it connects to a service delivery environment providing broadcast Internet TV or Internet protocol TV, where the genre of programs broadcast on a channel may vary widely. However, by identifying the genre of a program watched, very valuable information may be obtained for the user's profile.

The monitoring system may identify the genre of a program on the selected channel by obtaining an electronic program guide for the channel and identifying the genre of the program transmitted on the requested channel. The electronic program guide provides an accurate and up-to-date way by which the monitoring system can automatically identify the genre of a program being watched.

The monitoring system may identify the requested TV channel from the requested address and determine when transmission of a TV channel to a user commences and when it terminates and then compared this with the TV programs on that channel in that period to determines the proportion of the program transmitted. Determining the proportion of the program transmitted is important, because it distinguishes between a desired program and one which was only watched for a short duration, for example while assessing the content of the program, or watching the end of a previous program before the desired program commenced. This enables the monitoring system to score a particular genre of program watched in dependence on the proportion of that program which was watched.

The monitoring system may monitor control signals and determine that a user has left a program when the user tunes from a channel.

A preferred communication system in accordance with the present invention may be able to establish a user's presence, or create a profile for a user, by monitoring the content of the services delivered to the user, or at least a gateway associated with that user, from the different service delivery environments.

A preferred communication system in accordance with the present invention may be able to identify the individual user or group of users consuming the service at the end user device, for example a user making a VoIP call from a digital phone at home, a user watching IPTV or a user surfing the Internet. This information is valuable in a multiuser home, typically families, where members have different service profiles and preferences.

Preferably, the system further comprises a server for creating or updating user profiles for the plurality of user gateways, including the respective real time status of the plurality of user gateways or end user devices. Real time data can then be provided to the server to enable enhanced services to be provided to a user. For example a service delivery environment may be willing to pay for access to the data on the server, so that advertising material may then be specifically targeted at selected users.

Preferably the system comprises a server for creating or updating user profiles for one of the plurality of users consuming the service at the end user device (TV, PC, VoIP phone), behind the associated user gateway, including historic data monitored for users consuming the service. This server may also include real time status of the user or plurality of users and again may provide the information to service delivery (Internet, IPTV, VoIP-IMS) environments in order to modify the content provided to a particular users at the end user devices behind the respective gateway. The system may include multiple end user devices and may permit associated users to place signals on the communications network to modify their respective user profiles. For example, a user may indicate if he wishes to receive, or not receive, communications of a specific nature or containing a specific type of content.

The system preferably comprises a plurality of service delivery environments (Internet, IMS, IPTV, other) and a control system for receiving user profiles and controlling the content delivered from the service delivery environments to the user gateways in dependence thereon. In this manner, the user profiles can be used to control the type and content of the communications traffic received by the service delivery environments.

Preferably, the communication network comprises an access node and the monitoring system is located at the access node or inside the access node.

Advantageously, the monitoring system is arranged to monitor user activities including use of one or more of: television channel selection; searching/browsing Internet content; or use of a voice telephone service. Additionally, or alternatively, the monitoring system may be arranged to monitor the content of services by monitoring one or more of video on demand (VoD) real time streaming protocol (RTSP) messages, world wide web (www) surfing hypertext transfer protocol (http) messages, or voice over the Internet (VoIP) call sessions initiation protocol (SIP) messages.

In accordance with a second aspect of the present invention there is provided a method for monitoring services requested by a user, the method comprising establishing a communications network between a plurality of service delivery environments and a plurality of user devices via user gateways associated with respective user devices, monitoring the services requested by each of the respective users from a plurality of the service delivery environments, at least one of which delivers Internet TV or Internet Protocol TV (IPTV), the method further comprises the steps of identifying a TV channel requested by a user, identifying the genre of a specific program transmitted to the user on that channel and using this information to create or update a profile of the user.

### Brief Description of the Drawings

One embodiment of the present invention will now be described, by way of example only, with reference to the accompanying figure of which:
Figure 1 schematically illustrates a communications network in accordance with the present invention; and
Figure 2 illustrates the some of steps performed by the monitoring system 21 of Figure 1.

### Detailed Description of the Drawings

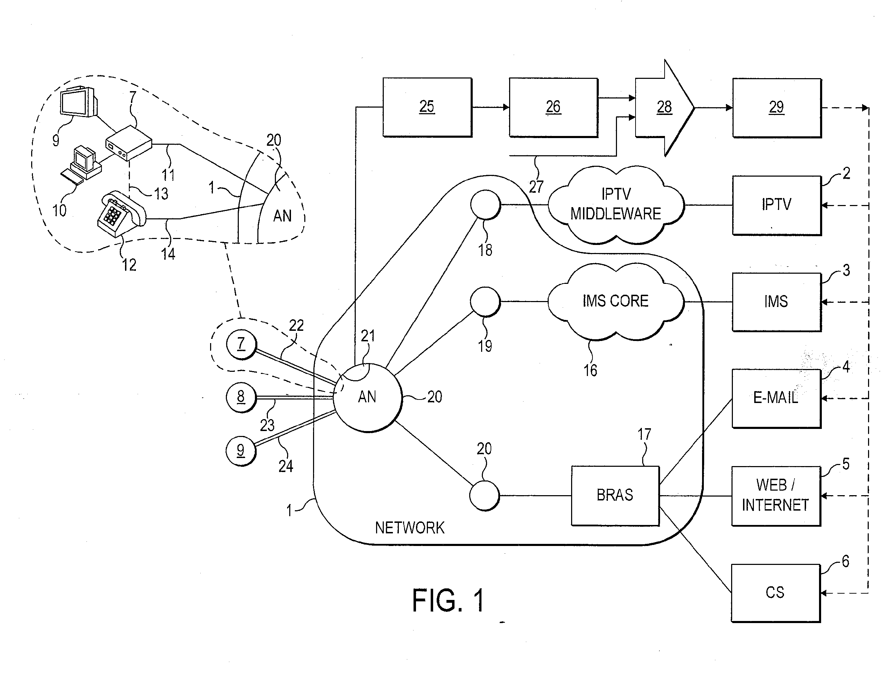

Referring to Figure 1, a communication system is illustrated comprising a communication network 1 connecting a plurality of service delivery environments to a plurality of user gateways, 7 to 9.

User gateway 7 is illustrated in more detail in the enlarged inset. The gateway comprises a residential gateway 7 connected by line 11 to the communication network 1. The residential gateway 7 is connected to a television 9 and personal computer 10. The line 11 may, for example, be a copper wire or an optical fibre connection. The gateway may also include a connection to a telephone 12 (this can be the same line 11 and, in fact, in most cases it will be the same line 11 split inside the home). In the illustrated embodiment, the telephone is shown connected directly to the communication network 1 through a separate line 14. In this case, although two separate wires 11 and 14 are used to connect to the communication network, the communication network can associate these as belonging to a single user and therefore these two lines 11 and 14 can are considered to comprise a single user gateway. In a further alternative arrangement, the telephone 12 could be connected to the router 8 via a line 13.

The service delivery environments 2 to 6 have been given by way of example only, but the invention may be applicable to alternative service delivery environments, some of which may not even be known at the time of filing the present application. The illustrated examples of service delivery environments comprise Internet protocol TV (IPTV) severs 2, an IP multimedia subsystem (IMS) servers 3 for VoIP and multimedia communications, an email server 4, a web/Internet server 5 and a content sharing server 6. In practice, servers 2 and 3 are typically a combination of servers, which together deliver a service. For example for IPTV: a Service, Discovery and Selection Server is used to allow the user to navigate through services and select content or programs; a video on demand server is used to deliver video-on-demand when the user selected video on demand and a broadcast TV server is used to deliver broadcast TV when user switches to broadcast TV channels. The IPTV servers 2 may be used for supplying video on demand or broadcast TV. The IMS application server 3 may provide connection to traditional telephone systems.

The IPTV application server 2 is connected to the communication network 1 via IPTV middleware 15 or may be part of the IPTV middleware.

The IPTV server may also be accessed over the communication network 1 to obtain an electronic program guide (EPG). This enables information relating to broadcast programs to be displayed on request and typically provides schedule information, a summary of each program and the genre of each program.

In the illustrated embodiment in Figure 1, the communication network 1 comprises an IMS core 16 for receiving communications from the IMS application server 3 and a broadband remote access server 17, arranged to receive communications from email servers 4, web/Internet servers 5 and content sharing servers 6. These are in turn linked through various components, represented by components 18, 19 and 20 of the communications network 1, to an access node 20 (AN). Those components could be IP routers. The access node 20 may be a digital subscriber line access multiplexer (DSLAM) or an intelligent services access manager (ISAM). The access node 20 is connected by links 22, 23, 24 to the user gateways 7, 8 and 9 respectively. As already stated, each link, for example link 22, may include separate lines 11 and 14.

The access node 20 comprises a monitoring system 21, which monitors the type and content of communications requested by and transmitted to each gateway and end user device identifying the users consuming the service. The access node 20, may be located in an exchange or at any hub within a communication network, for example within a street connection box.

The monitoring system 21 identifies when a session initiation protocol (SIP) call is being set up, when an IPTV channel is requested, Internet TV is being watched, or the Internet is being browsed and has the identification of the user or user gateway that initiated the service. This information is directed to a presence server 25, where it is subsequently transferred to historic presence server 26. Monitoring system 21 monitors the requests for services to be delivered to the user devices, for example it may monitor control traffic for real time streamlining protocol (RTSP) messages in respect of video on demand (VoD), web surfing (HTTP) messages, and session initiation protocol (SIP) messages in respect of video over Internet protocol (VoIP) calls.

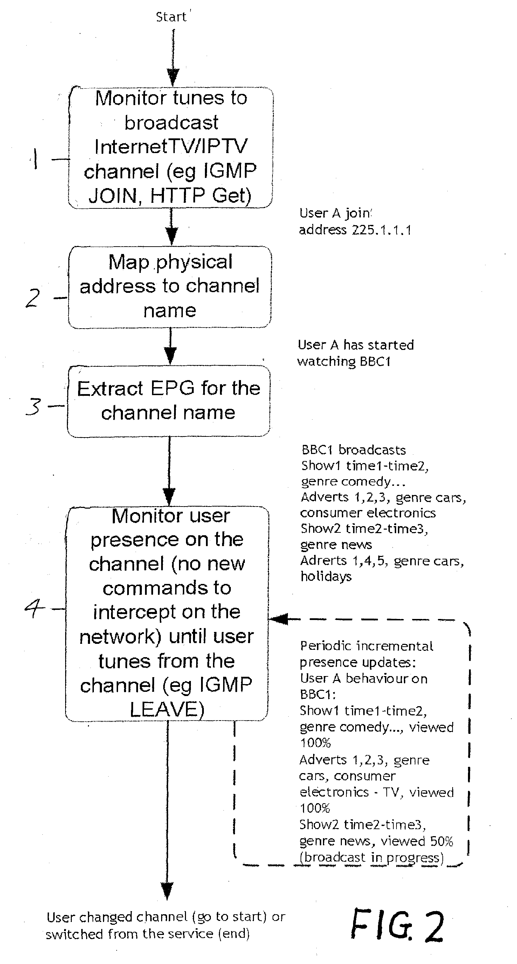

Detected activities may include the requesting (watching) of a particular TV channel, program metadata on the TV channel including the genre of the program being watched (discussed below with reference to Figure 2), searching/browsing Internet, and calling friends. These detected activities enable the presence and historic presence servers 25 and 26 to reflect user status and past history, providing high granularity, historic activities across multiple SDEs for a user's profile. The user may also provide information to modify his profile, for example his desirability to be contacted or to receive certain types of communication, for example advertising messages.

The collected and user modifiable part of a user profile may be kept separately.

Data from the servers 25 and 26, together with other user profile data that is input to the system, represented by line 27, provides a user profile 28. Access to the user profile 28 is gained by control system 29 and may be provided to one or more of the service delivery environments 2 to 6. These may then tailor their services to a particular user gateway 7, 8 or 9. For example, if a particular user gateway 7 has been browsing the Internet for material relating to motorcars, then advertising material provided by the IPTV server 2 may be modified to provide a bias towards adverts containing material relevant to the owner of a motorcar.

Referring now to Figure 2, there is illustrated exemplary steps of the method performed by the monitoring system 21.

The monitoring system 21 first tunes to the broadcast Internet TV or IPTV channel selected by the user, for example user 'A' may join address 225.1.1.1 and the monitoring system 21 will note the request, eg an 'IGMP JOIN' or 'HTTP Get'. The monitoring system in step 2 maps the physical address to a channel name and may identify that user A has started to watch a particular channel, BBC1.

In step 3, monitoring system 21 extracts metadata on the TV channel including an electronic program guide (EPG) for BBC1. From this, the monitoring system 21 obtains the time a program starts and time a program ends and the genre of each program.

In step 4, the monitoring system continues to monitor the user's presence on the channel, no new commands or intercepts implies the user is still watching the program, until the user tunes from the channel, which the monitoring system 21 detects by detecting for example an 'IGMP LEAVE' command. If the user changed channels the monitoring system repeats steps 1 to 4, or if the user switched from the service the monitoring system ends its monitoring of that service.

From the electronic program for a channel and the times a user started and finished watching a channel, the monitoring system can determine what percentage of a program the user watched. This is important because a user may tune to a channel slightly before the program he intends to watch starts. If the extent of the program watched is not monitored, the program tuned to prior to the desired program would score equally with the desired program and degrade the quality of the information obtained.

During step 4, the monitoring system may provide periodic incremental presence updates to the presence server 25, so that real-time data relating to the content of a program being watched can be used to tailor additional information transmitted to the user. Therefore, where a gateway is associated with different individuals, one of which may for example be interested in cars and the other may be interested in gardening, advertising material directed to cars, or to people who generally have an interest in cars, may be transmitted at a time a program relating to cars is being received by the user or user gateway.

One example of a system in accordance with the present invention has been described above by way of example only. However, it will be appreciated that many variations and alternatives of such a system are possible within the scope of the appended claims.

## Claims

1. A communications system comprising a communications network (1), the communications network being arranged to transmit communications from a plurality of service delivery environments (2 - 6) to a plurality of end users via a plurality of user gateways (7, 8, 9), the network comprising a monitoring system (21) arranged to monitor the services requested by each of the plurality of users via the plurality of user gateways (7, 8, 9) from the plurality of service delivery environments (2 - 6), the system comprising one or more servers (25) for creating or updating user profiles (28) for the plurality of users or user gateways, wherein at least one of the service delivery environments (2) provides broadcast Internet TV and/or Internet Protocol TV (IPTV), **characterised in that** the monitoring system (21) identifies a TV channel requested by the user and the genre of the program transmitted to the user on that channel and uses this information to create or update the user profile.

2. A system as claimed in Claim 1, wherein the monitoring system identifies the genre of a program on the selected channel by obtaining an electronic program guide for the requested channel and identifies the genre of the program transmitted on the requested channel.

3. A system as claimed in Claim 1 or 2, wherein the monitoring system identifies the requested TV channel from a requested address.

4. A system as claimed in any preceding claim, wherein the monitoring system (21) determines when transmission of a TV channel to a user commenced and when it terminated, compares this with TV programs on that channel in that period and determines the proportion of the program transmitted to the user.

5. A system as claimed in Claim 4, wherein the monitoring system (21) monitors control signals and determines that a user has left a channel when the user tunes from the channel.

6. A system as claimed in any preceding claim, wherein a server (25) creates or updates the user profiles including the respective real time status of the plurality of users or gateways.

7. A communications system as claimed in any preceding claim, wherein a server (26) creates or updates user profiles for the plurality of users or user gateways including historic data monitored for the respective users or user gateways.

8. A communications system as claimed in any preceding claim, comprising a plurality of users and user gateways, wherein the user gateways permit associated users to place signals on the communication network to modify their respective user profile.

9. A communications system as claimed in any preceding claim, comprising a plurality of service delivery environments (2 - 6) and a control system (29) for receiving user profiles (28) and controlling the content or services delivered from the service delivery environments (2 - 6) to the user gateways and end users in dependence thereon.

10. A communications system as claimed in any preceding claim, wherein the network comprises an access node (20) and the monitoring system (21) is located at the access node.

11. A communications system as claimed in any preceding claim, wherein the monitoring system (21) is arranged to monitor user activities including one or more of: television channel selection and searching/browsing Internet content.

12. A communications system as claimed in any preceding claim, wherein the monitoring system (21) is arranged to identify individual users at user devices to create or update the profiles of the user.

13. A communications system as claimed in any preceding claim, wherein the monitoring system (21) is arranged to monitor the content of services by monitoring one or more of the following types of communication:
video on demand (VoD) - real time streaming protocol (RTSP or http) messages, world wide web (www) - surfing hypertext transfer protocol (http) messages, or voice over the Internet (VoIP) - call sessions initialisation protocol (SIP) messages.

14. A method for monitoring services requested by a user, the method comprising establishing a communications network (1) between a plurality of service delivery environments (2 - 6) and a plurality of user devices via user gateways (7, 8, 9) associated with respective user devices (9, 10, 12) monitoring the services requested by each of the respective users from a plurality of the service delivery environments, at least one of which delivers Internet TV or Internet Protocol TV (IPTV), **characterised in that** the method further comprises the steps of identifying a TV channel requested by a user, identifying the genre of a program transmitted to the user on that channel and using this information to create or update a profile of the user.

15. A method as claimed in Claim 14, further comprising the steps of obtaining an electronic program guide for the requested channel and identifying the genre of the program transmitted on the selected channel.

16. A method as claimed in Claim 14 or 15, further comprising the step of using a user profile to control the content of services delivered from the plurality of service delivery environments (2-6) to the user devices.
